# EUROPEAN PATENT APPLICATION

(11) **EP 4 668 854 A1**
(43) Date of publication of application: **24.12.2025**
(21) Application number: 23921885.2
(22) Date of filing: 16.02.2023
(51) Int. Cl.: H04W 36/00, H04L 67/52, H04W 4/029

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/076578
(87) International publication number: WO 2024/168731

(57) **Abstract**

Embodiments of the present invention provide an information processing method, which is applied to a UE. The method comprises: sending indication information to a network device according to whether the UE has an available moving path, wherein the indication information is used for indicating whether the UE has an available moving path.

## Description

### TECHNICAL FIELD

The present disclosure relates to, but is not limited to, the field of wireless communication technologies, and in particular to an information processing method and apparatus, a communication device, and a storage medium.

### BACKGROUND

In recent years, the demand for a service based on an Unmanned Aerial Vehicle (UAV) or other User Equipment (UEs) has increased dramatically, including various UAV operations, personal entertainment through flight experiences, and cargo delivery. The UE needs to be controlled and to transmit data during use. Remote control and data transmission capabilities serve as the basic guarantee for the UE to provide these services. For example, the feasibility of connecting UAV through a terrestrial cellular system and required enhancements in remote control and data transmission have been verified, and Long Term Evolution (LTE) has made corresponding enhancements in uplink (UL) and downlink (DL) interference and mobility.

In a New Radio (NR), applications suitable for the UAV are more diverse, and there are lower latency and higher transmission rate requirements for the UAV.

### SUMMARY

Embodiments of the present disclosure provide an information processing method and apparatus, a communication device, and a storage medium.

A first aspect of the embodiments of the present disclosure provides an information processing method. The method is applied to a UE, and the method includes:
sending indication information to a network device according to whether the UE has an available moving path, in which the indication information indicates whether the UE has the available moving path.

A second aspect of the embodiments of the present disclosure provides an information processing method. The method is applied to a network device, and the method includes:
receiving indication information sent by a UE, in which the indication information indicates whether the UE has the available moving path.

A third aspect of the embodiments of the present disclosure provides an information processing apparatus. The apparatus is applied to a UE, and the apparatus includes:
an indication information sending module, configured to send indication information to a network device according to whether the UE has an available moving path, in which the indication information indicates whether the UE has the available moving path.

A fourth aspect of the embodiments of the present disclosure provides an information processing apparatus. The apparatus is applied to a network device, and the apparatus includes:
an indication information receiving module, configured to receive indication information sent by a UE, in which the indication information indicates whether the UE has the available moving path.

A fifth aspect of the embodiments of the present disclosure provides a communication device. The device includes a processor, a transceiver, a memory, and an executable program stored in the memory and capable of being run by the processor, in which the processor executes the information processing method provided in any of the above embodiments when running the executable program.

A sixth aspect of the embodiments of the present disclosure provides a computer storage medium, which stores an executable program. After the executable program is executed by a processor, the information processing method provided in any of the above embodiments is enabled to be implemented.

The information processing methods provided by the embodiments of the present disclosure can enable the UE to send the indication information of whether the UE has the available moving path to the network device according to whether the UE has the available moving path, thereby enabling the UE to autonomously send the indication information to the network device based on the state of its own moving path.

The technical solutions provided by the embodiments of the present disclosure should be understood that the above general description and the following detailed descriptions are merely exemplary and explanatory and do not limit the embodiments of the present disclosure.

### BRIEF DESCRIPTION OF THE DRAWINGS

The accompanying drawings, which are incorporated in and constitute a part of the specification, illustrate the embodiments of the present disclosure and, together with the description, serve to explain the principles of the embodiments of the present disclosure.
FIG. 1 is a schematic structural diagram of a wireless communication system according to an example embodiment.
FIG. 2 is a schematic diagram of an information processing method according to an example embodiment.
FIG. 3 is a schematic diagram of a method for sending indication information according to an example embodiment.
FIG. 4 is a schematic diagram of another method for sending indication information to a network device according to an example embodiment.
FIG. 5 is a schematic diagram of another method for sending indication information to a network device according to an example embodiment.
FIG. 6 is a schematic diagram of a method for sending an indication of unavailability according to an example embodiment.
FIG. 7 is a schematic diagram of another information processing method according to an example embodiment.
FIG. 8 is a schematic diagram of another method for sending indication information to a network device according to an example embodiment.
FIG. 9 is a schematic diagram of another information processing method according to an example embodiment.
FIG. 10 is a schematic diagram of another information processing method according to an example embodiment.
FIG. 11 is a schematic diagram of a method for receiving UE assistance information (UAI) including indication information according to an example embodiment.
FIG. 12 is a schematic diagram of another information processing method according to an example embodiment.
FIG. 13 is a schematic diagram of an information processing apparatus according to an example embodiment.
FIG. 14 is a schematic diagram of another information processing apparatus according to an example embodiment.
FIG. 15 is a block diagram of a UE according to an example embodiment.
FIG. 16 is a structure of an access device according to an example embodiment.

### DETAILED DESCRIPTION

Reference will now be made in detail to example embodiments, examples of which are illustrated in the accompanying drawings. When the following description refers to the drawings, unless otherwise indicated, the same numerals in different drawings represent the same or similar elements. Implementations described in the following example embodiments do not represent all implementations consistent with the embodiments of the present disclosure. Rather, they are merely examples of apparatus and methods consistent with some aspects of the disclosed embodiments.

The terms used in the embodiments of the present disclosure are only for the purpose of describing specific embodiments and are not intended to limit the embodiments of the present disclosure. As used in the present disclosure, the singular forms "a", "an", "this", and "the" are intended to include the plural forms as well, unless the context clearly indicates otherwise. It will also be understood that the term "and/or" as used herein refers to and encompasses any and all possible combinations of one or more of the associated listed items.

It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, second information may also be referred to as first information. The word "if" as used herein may be interpreted as "when" or "in a case that" or "in response to determining that" depending on the context.

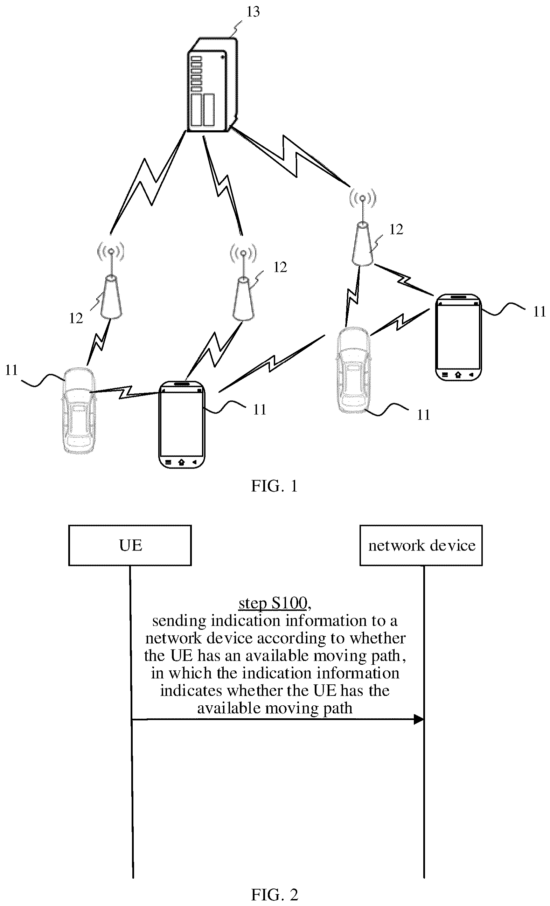

Please refer to FIG. 1, which shows a schematic structural diagram of a wireless communication system provided by an embodiment of the present disclosure. As shown in FIG. 1, the wireless communication system is a communication system based on cellular mobile communication technologies, and the wireless communication system may include at least one UE 11 and several core network devices.

The UE 11 may refer to a device that provides voice and/or data connectivity to a user. The UE 11 may communicate with one or more core networks via a radio access network (RAN). The UE 11 may be an IoT UE, such as a sensor device, a mobile phone (or a cellular phone), and a computer with an IoT UE, for example, a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a UE. Alternatively, the UE 11 may also be an unmanned aerial vehicle (UAV). Alternatively, the UE 11 may also be an in-vehicle device, for example, a driving computer with a wireless communication function, or a wireless communication device externally connected to the driving computer. Alternatively, the UE 11 may also be a roadside device, for example, a street lamp, a traffic light, or other roadside device with a wireless communication function.

The access device 12 may be a network device in the wireless communication system. The wireless communication system may be a fourth generation mobile communication technology (4G) system, also known as a long term evolution (LTE) system, or the wireless communication system may be a 5G system, also known as a new radio (NR) system or a 5G NR system. Alternatively, the wireless communication system may be a next generation system beyond the 5G system. The access network in the 5G system may be called a New Generation-Radio Access Network (NG-RAN). Or, an MTC system.

The access device 12 may be an evolved base station (eNB) used in a 4G system. Alternatively, the access device 12 may also be an access device (gNB) that adopts a centralized-distributed architecture in a 5G system. When the access device 12 adopts the centralized-distributed architecture, it generally includes a centralized unit (CU) and at least two distributed units (DUs). The centralized unit is provided with a protocol stack of a packet data convergence protocol (PDCP) layer, a radio link layer control protocol (RLC) layer, and a media access control (MAC) layer. The distributed unit is provided with a physical (PHY) layer protocol stack. The embodiments of the present disclosure do not limit the specific implementation of the access device 12.

A wireless connection may be established between the access device 12 and the UE 11 via a radio air interface. In different implementations, the radio air interface is a radio air interface based on the fourth-generation mobile communication network technology (4G) standard, or the radio air interface is a radio air interface based on the fifth-generation mobile communication network technology (5G) standard, for example, the radio air interface is a new air interface; or the radio air interface may also be a radio air interface based on the next-generation mobile communication network technology standard of 5G.

In order to enhance the mobility, in an LTE UAV, the network device requests the UE to report a planned moving path to the network device (such as eNB or gNB) by sending request information, such as a radio resource control (RRC) message. For example, the UE may send information indicating the planned future position of the UE according to the request information. As for the mobility of the UE, the base station may integrate the information to configure the mobility, such as handover, for the UE. The base station may be able to know in advance which cell is suitable for the UE to access in the future and use it as a target cell for the UE. The UE moves according to the pre-configured moving path. When the UE arrives at a position adjacent to an edge of the current serving cell, or even before the UE reaches the edge of the current serving cell, the serving base station may start performing handover preparation with a neighboring target base station. For example, the target base station within a target base station range of the next path point in the moving path is selected, the terminal context is forwarded in advance, and radio resources are pre-configured for the UE in the target base station, and then a handover command is sent to the UE under a high-quality radio link condition.

Referring to FIG. 2, which is a schematic diagram of an information processing method. The method is applicable to a UE, and the method includes:
step S100: sending indication information to a network device according to whether the UE has an available moving path, in which the indication information indicates whether the UE has the available moving path.

In an implementation, the network device may include a base station, which may be an evolved node base station (eNB), or a network device in a 5G system, such as a next generation node base station (gNB), or a transmission and reception point (TRP) or other devices, or a network device in a subsequent evolved communication system.

In an implementation, a moving path may include a flight path and a ground moving path.

For example, the UE may automatically acquire its own moving path. For example, the UE may also acquire the moving path from an application layer.

In an implementation, if the UE does not acquire the moving path, the moving path is unavailable, that is, the UE does not have the available moving path. If the UE acquires the moving path, the moving path is available, that is, the UE has the available moving path.

In an implementation, the UE may also determine whether the moving path is available after acquiring the moving path. When it is determined that the moving path is available, the UE has the available moving path; when it is determined that the moving path is unavailable, the UE does not have the available moving path.

There are many ways to determine whether the UE has the available moving path. The following are some examples.

The UE determines, based on a user instruction received from a user interface, whether a moving path currently planned by the UE or a moving path represented by moving path information received from another device is the available moving path. If so, the UE has the available moving path; otherwise, the UE does not have the available moving path.

When the UE receives moving path information from its control device, it defaults that a moving path indicated by the moving path information is the available moving path, that is, the UE has the available moving path.

When the UE re-plans a moving path to reach a destination during movement, the re-planned moving path may be defaulted as the available moving path, that is, the UE has the available moving path.

If the re-planning of the available path fails during the UE's moving process, and the UE defaults restart of planning, the historical available moving path becomes invalid, and it may be considered that there is no moving path being currently available to the UE.

In summary, the UE determines whether the UE has the available moving path based on the user instruction, self-determination, and/or interaction with information from other devices.

The UE may be a flight device or a ground-moving device. The ground-moving device includes but is not limited to a vehicle-mounted device, etc. As an example, the UE may be an unmanned aerial vehicle (UAV).

For the flight device, the moving path may be a flight path. For the ground-moving device, the moving path may be a road moving path planned or designed by a vehicle. After determining whether there is the available moving path, the UE sends the indication information to the network device, to indicate whether the UE has the available moving path. The available moving path may also include an acquirable moving path.

In an implementation, the indication information may be information indicating that the UE has the available moving path, or may be information indicating that the UE does not have the available moving path.

According to the information processing method provided by the above-mentioned embodiment of the present disclosure, the UE can send the indication information of whether the UE has the available moving path to the network device according to whether the UE has the available moving path, thereby enabling the UE to autonomously send the indication information to the network device based on the state of its own moving path.

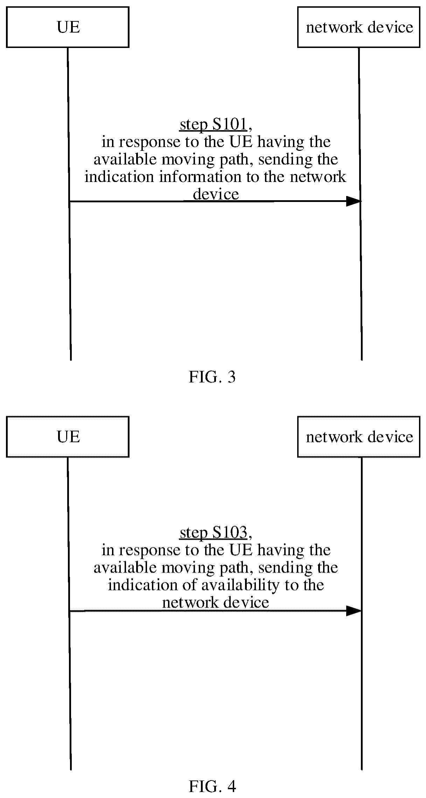

In an embodiment, referring to FIG. 3, which is a schematic diagram of sending the indication information. The method may be applied to the UE, and the method includes:
step S101: in response to the UE having the available moving path, sending the indication information to the network device.

When the UE determines that the UE has the available moving path, the UE sends the indication information to the network device. The indication information may be carried in a predefined field, such as flightPathInfoAvailable.

In an implementation, the UE sends a specific message to the network device, based on a communication protocol or a request message sent by the network device. When the UE has the available moving path, the UE configures or includes the indication information in the specific message sent to the network device, indicating that there is the moving path available or acquirable for the UE. The specific message may include: a radio resource control (RRC) message, a MAC layer message, or Uplink Control Information (UCI), etc.

In an embodiment, sending the indication information may be applied to the UE, and the method includes:
in response to the UE not having the available moving path, it is determined not to send the indication information to the network device. When the UE determines that the UE does not have the available moving path, it does not send the indication information to the network device.

In an implementation, based on the communication protocol or the request message sent by the network device, the UE sends the specific message to the network device. The UE does not send the indication information to the network device when there is no available moving path. The specific message does not contain the indication information, which indicates that there is no moving path available or acquirable for the UE.

In an embodiment, the indication information includes an indication of availability, and/or an indication of unavailability.

The indication of availability indicates that the UE has the available moving path.

The indication of unavailability indicates that the UE does not have the available moving path.

The indication of availability and the indication of unavailability may be carried by the same field or information element (IE). Alternatively, they may be carried by different fields or IEs.

As an example, an initial flight path information available or acquirable indication, such as a flight path information available indication, is triggered to be reported. This indication indicates that there is currently a flight path available to the UE. This indication information is sent by the UE to the network device (NW).

In an implementation, whether to report the flight path available indication is determined according to whether flight path-related information has been reported.

In an implementation, if the UE has not reported flight path information, and the UE has the available flight path, then the flight path available indication is reported.

In an implementation, if the UE has not reported the flight path available indication, and the flight path is available, then the flight path available indication is reported.

In an embodiment, reporting of the flight path available indication is triggered after the flight path is updated. This indication information indicates that there is a flight path being currently available to the UE. This indication information is sent by the UE to the NW. This indication information may be used to indicate that the UE has a new available flight path.

In an implementation, whether to report the flight path available indication is determined according to whether the flight path information is changed.

In an implementation, the UE has the available flight path, that is, the flight path is available, and the current available flight path has changed compared with the most recently reported available flight path, and then the flight path available indication is reported.

The current available flight path having changed compared to the most recently reported available flight path means that: each waypoint in the most recently reported available flight path is not included in the current available flight path. The path information corresponding to the last sent flight path and the path information corresponding to the currently available flight path both includes: position information of path points. Alternatively, the path information includes: position information and time information of the path points. The time information indicates the time where the path points are planned to be passed.

In an embodiment, if the UE does not have the available flight path, i.e., the flight path is unavailable to the UE, the UE may report a flight path unavailable indication, where the flight path unavailable indication indicates that the most recently reported available flight path has become unavailable.

In an embodiment, the indication information may further include a path update indication, and in this case, sending the indication information to the network device according to whether the UE has the available moving path includes:
in response to the available moving path of the UE being updated, sending the path update indication to the network device.

The path update indication indicates that the available moving path of the UE is updated, which includes: the available moving path is updated, and a new flight path is available to the UE. The indication information at this time is an update indication.

The update indication also indicates that the UE has the available moving path.

In some embodiments, the update indication may be the aforementioned indication of availability.

In some other embodiments, the update indication is included in the aforementioned indication of availability.

In an implementation, the indication of availability may be used to indicate that the UE has the available moving path and/or that the available moving path of the UE is updated.

In an embodiment, as shown in FIG. 4, which is a schematic diagram of sending the indication information to the network device, the method is applicable to the UE, and the method includes:
step S103: in response to the UE having the available moving path, sending the indication of availability to the network device.

When the UE configures or acquires an initial available moving path (or acquirable moving path), or there is the updated moving path available for the UE, it sends the indication of availability to the network device. Therefore, the indication of availability informs the network device that the UE currently has the available moving path, which facilitates the network device to instruct the UE to report the path information of the available moving path and/or to configure resource information for the UE to report the path information according to the requirements of the network device and/or the requirements of providing communication services.

The available moving path here may be: a valid path along which the UE plans to move, or a valid path along which the UE is currently moving.

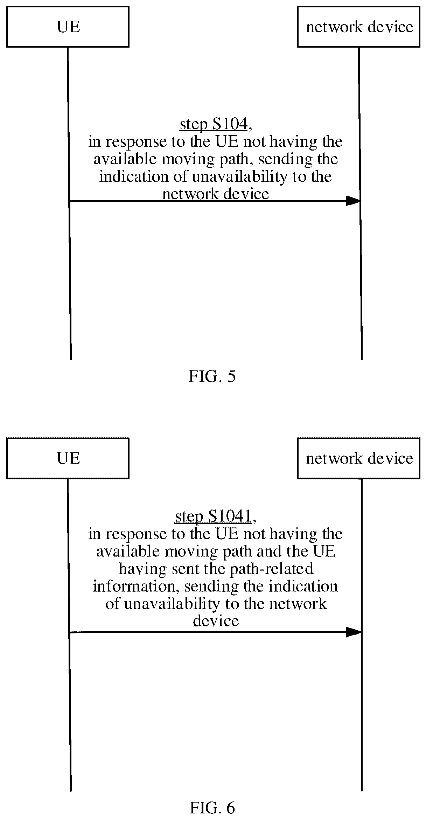

In an embodiment, as shown in FIG. 5, which is another schematic diagram of sending the indication information to the network device, the method may be applied to the UE, and the method includes:
step S104: in response to the UE not having the available moving path, sending the indication of unavailability to the network device.

For example, the UE is configured with the available moving path, but the available moving path is no longer available due to the UE's moving plan being stopped or the UE's destination being updated. In this case, the UE does not have the available moving path and the indication of unavailability is sent to the network device. In this way, the path information of the historically available moving path received by the network device may be discarded or invalidated, so the network device does not need to continue to prepare in advance for the cell handover and/or reselection of the UE based on the historically reported available moving path, which reduces unnecessary actions on the network side.

In an embodiment, S103, that the indication information is sent to the network device in response to the UE having the available moving path, includes at least one of:
in response to the UE having the available moving path and the UE having not sent path-related information, sending the indication of availability to the network device; or
in response to the available moving path of the UE being updated, sending the indication of availability to the network device.

The UE may automatically determine whether there is the available moving path, and may also determine whether the path-related information has been sent before. If the UE has the available moving path and the UE has not sent the path-related information, the UE sends the indication of availability to the network device. Here, the UE sending the indication of availability to the network device includes: the UE sending the indication of availability to the network device for a first time, and the indication of availability here is an initial indication of availability.

The path-related information includes one or more of: the indication of availability, the indication of unavailability, or path information of the moving path.

For example, the UE has previously sent path information of historical available moving path through the path-related information. Due to the update of the available moving paths, the previously reported path information cannot accurately reflect the current available path. In order to reduce the network device's preparation work for the cell handover and/or reselection of the UE based on the wrong historical available moving path, the sending of the indication of availability is equivalent to implicitly informing the network device that the available moving path for the UE is updated, and the path information of the old historical available moving path may be discarded or invalidated.

For example, the UE has previously sent the indication of availability for a historical available moving path through the path-related information. Due to the update of the available moving path, the historical available moving path that triggered the reporting of the indication of availability is invalid. In order to reduce the network device's preparation to acquire the historical available moving path of the UE based on the indication of availability sent historically, the re-sending of the indication of availability is equivalent to notifying the network device that the network device needs to acquire the latest available moving path information of the UE. For another example, the UE has previously sent the indication of unavailability through the path-related information. Due to the update of the available moving path, there is the moving path currently being available to the UE. In order to reduce the time it takes for the network device to promptly know that there is the moving path being available to the UE, the sending of the indication of availability is equivalent to notifying the network device that the network device needs to acquire the latest available moving path information of the UE.

In an implementation, if the UE has the available moving path and the UE has not sent the indication of availability, the UE sends the indication of availability to the network device.

After the UE acquires the initial available moving path and has not sent the indication of availability, it may send the indication of availability to inform the network device that the available moving path is initially configured in the UE. If the network device has a need, it may instruct the UE to report the path information of the available moving path. In this embodiment of the present disclosure, the UE sends the indication of availability when the UE has the available moving path and has not sent the indication of availability before, thereby reducing repeated sending of the indication of availability by the UE and reducing signaling overhead.

In an implementation, if the UE has the available moving path and the UE has not yet sent the path information of the moving path, the UE sends the indication of availability to the network device.

The UE may also determine whether the available moving path is updated, which may be whether the available moving path is updated relative to the last sent available moving path. If it is determined that the available moving path is updated, the UE sends the indication of availability to the network device.

In a case that the moving path is updated, the indication of availability sent by the UE to the network device can facilitate the network device to determine that the previously sent available moving path is no longer applicable, facilitate the network device to determine that the UE has the new available moving path, and reduce the situation where the network device continues to perform the target cell handover for the UE through the previously available moving path.

In an embodiment, the UE having not sent the path-related information includes at least one of:
the UE having not sent the path-related information to the network device since entering a connected state;
the UE having not sent the path-related information to the network device since entering a current serving cell;
the UE having not sent the path-related information to the network device since being configured to send the indication information;
the UE having not sent the path-related information to the network device through specific information since being configured to send the indication information;
the UE having not sent the path-related information to the network device since receiving configuration information for the indication information;
the UE having not sent the path-related information to the network device since receiving configuration information for the path-related information.

The UE may also determine the time when it entered the current serving cell. If the UE has not sent the path-related information to the network device since entering the current serving cell and has the available moving path, it sends the indication of availability to the network device.

The UE may also determine the time when it was configured to send the indication information, and if the UE has not sent path-related information to the network device since being configured to send the indication information and has the available moving path, it sends the indication of availability to the network device.

The UE may be configured with the indication information through a predetermined rule or the configuration information sent by the network device. If the UE is configured with the indication information, it means that when the reporting condition is met, the UE needs to report the indication information. If the UE is not configured with the indication information, the UE does not need to report the indication information. Here, the reporting condition may be satisfied, for example, when the UE has the available moving path and has not sent the indication information, or when the available moving path of the UE is updated, or when the UE does not have the available moving path, and so on.

The predetermined rule here may at least includes: a protocol agreements, etc.

The configuration information may be acquired from a network device, and specifically may include the configuration information sent via various RRC messages.

The configuration information may include at least one of:
sending message for the indication information;
time-frequency domain resources for sending the indication information;
an information format of the indication information; or
a reporting condition of the indication information.

The specific information may include UE Assistance Information (UAI) or other information.

The UE may also determine the time when the configuration information for the indication information is received, and if no path-related information has been sent to the network device since the UE received the configuration information for the indication information and the UE has the available moving path, the indication of availability is sent to the network device.

In an embodiment, the available moving path of the UE being updated includes at least one of:
a current available moving path not containing at least one path point of a historical available moving path; or
a position deviation and/or a time deviation between the current available moving path and the historical available moving path reaches a threshold value.

In an embodiment, the moving path includes at least one path point. The path point includes a waypoint. The current available moving path includes at least one path point, and the historical available moving path includes at least one path point. When the current available moving path does not include the at least one path point of the historical available moving path, that is, the at least one path point of the historical available moving path is not in the current available moving path, the available moving path of the UE is updated.

For example, the path points in the historical available moving path include point A, point B, point C, point D and point F, the path points in the current available moving path include point A, point M, point B, point C, point D, point F and point E. The path points in the current available moving path include all the path points in the historical available moving path, then the available moving path of the UE is not updated. The current available moving path is not changed relative to the historical available moving path, and the UE does not send the indication of availability.

In some embodiments, when the UE reports the path information of the moving path to the network device, it may only report the information of some path points in the moving path. In this way, if the path points included in the current available moving path in the UE are not included in the reported historical moving path, it may be considered that the current available moving path has not been updated.

In other embodiments, one or more path points are added to the current available moving path of the UE, but the UE will still pass through the path points on the historical available moving path that have been reported according to the original plan or original design. In this case, the current available moving path may be considered to be covered by the historical available moving path, or the current available moving path may be considered not updated.

For another example, the updating of the available moving path does not include the following case.

The current available moving path is added with a path point based on the path points included in the historical available moving path. The path points in the historical available moving path include point A, point B, point C, point D and point F, and the path points in the current available moving path include point A, point M, point B, point C, point D, point F and point E. The current available moving path is added with the path points M and E on the basis of the path points included in the historical available moving path, and thus the available moving path is not updated.

For another example, the path points in the historical available moving path include point A, point B, point C, point D and point F, the path points in the current available moving path include point A, point C, point F and point E. The path points in the current available moving path do not include point B, point D and point F in the historical available moving path, then the available moving path of the UE is updated. When the current available moving path is updated relative to the historical available moving path, the UE sends the indication of availability.

For another example, the path points in the historical available moving path include point A, point B, point C, point D and point F, the path points in the current available moving path include point A, point D and point F. The path points in the current available moving path do not include point B and point C in the historical available moving path, then the available moving path of the UE is updated. When the current available moving path is updated relative to the historical available moving path, the UE sends the indication of availability.

In an implementation, the path information includes position information of the path points. Alternatively, the path information includes position information and time information of the path points. The time information indicates the time when the path points are planned to be passed.

In an implementation, when determining whether the available moving path is updated, a change threshold may be used. The change threshold includes: if the numerical count of path points in the historical available moving path that are not included in the current available moving path is greater than or equal to the change threshold, the available moving path is considered to be updated, and the indication of availability needs to be reported. The path point change threshold may be configured by the network device.

In an embodiment, the update of the available moving path of the UE may be understood as: the current available moving path changes compared with the historical available moving path.

In an implementation, the available moving path of the UE being updated, or change in the current available moving path compared with the historical available moving path includes:
the current available moving path does not contain at least one path point of the historical available moving path; or
the position deviation and/or the time deviation between the current available moving path and the historical available moving path reaches the threshold value.

In an embodiment, the historical available moving path is the available moving path sent by the UE in the last time.

In an embodiment, the historical available moving path is the available moving path sent by the UE in the last time through a UAI. The UAI is an IE sent by the UE via an RRC message in the connected state.

In an embodiment, the historical available moving path is the available moving path that the UE last sent through one or more of a radio resource control reconfiguration message (RRCReconfiguration), a radio resource control reestablishment message (RRCReestablishment), a radio resource control handover message (RRCResume) or a radio resource control setup message (RRCSetup message).

The position deviation between the current available moving path and the historical available moving path includes: a position deviation between the path point in the current available moving path and the path point in the historical available moving path.

For example, if the position deviation between the current available moving path and the historical available moving path is greater than or equal to a first threshold value, the available moving path of the UE is updated.

In an implementation, the update of the available moving path includes: the position deviation between a position of a first path point in the current available moving path and a position of a second path point in the historical available moving path is greater than or equal to a first threshold value, in which the time when the UE arrives at the first path point is the same as the time when the UE arrives at the second path point.

In an implementation, the position deviation between the current available moving path and the historical available moving path reaching the threshold value includes:
within a preset time difference range, a position deviation between at least one path point in the current available moving path and a corresponding path point in the historical available moving path is greater than or equal to the first threshold value. The preset time difference range here includes: a time difference range between the time when the UE passes through a path point in the current available moving path and the time when the UE passes through a corresponding path point in the historical available moving path.

In an embodiment, the position deviation between the current available moving path and the historical available moving path reaching the threshold value includes:
the position deviation between at least one path point in the current available path and the historical available moving path being greater than or equal to the first threshold value.

In an implementation, the position deviation between the at least one path point in the current available path and a corresponding path point in the historical available moving path is greater than or equal to the first threshold value.

In an embodiment, the time deviation between the current available moving path and the historical available moving path includes: a time deviation between the UE arriving at a path point in the current available moving path and the UE arriving at the same path point in the historical available moving path.

For example, when the time deviation between the current available moving path and the historical available moving path reaches the second threshold value, the available moving path of the UE is updated.

In an implementation, the updating of the available moving path includes: the time deviation between a time of a first waypoint in the current available moving path and a time of a second waypoint in the historical available moving path reaches a second threshold value. The first waypoint and the second waypoint are the same waypoint.

As an example, the time deviation refers to a time difference between the time corresponding to a waypoint in the current flight path and the time corresponding to the same waypoint in the historical available moving path. If the time deviation is greater than the second threshold value, the available moving path may be updated and the flight path available indication may be reported.

In an embodiment, the historical available moving path is an available moving path sent by the UE in the last time.

The available moving path here is an available moving path indicated by path information sent by the UE to the network device in the last time.

In an embodiment, the time deviation between the current available moving path and the historical available moving path reaching the threshold value includes:
the time difference between a passing time of at least one path point in the current available path and a passing time of the corresponding path point in the historical available moving path being greater than or equal to the second threshold value.

In an implementation, the historical available moving path is an available moving path sent by the UE last time.

In an embodiment, the current available moving path not containing at least one path point of the historical available moving path includes:
some or all of the path points in the historical moving path are not included in the current moving path.

As an example, X path points among M path points included in the historical moving path are not included in the current moving path, X and M are positive integers, and X≤M.

In an embodiment, as shown in FIG. 6, which is a schematic diagram of sending the indication of unavailability, the method may be applied to the UE, and the method includes:
step S1041: in response to the UE not having the available moving path and the UE having sent the path-related information, sending the indication of unavailability to the network device.

In an implementation, the path-related information includes: one or more of the indication of availability, the indication of unavailability, and path information of the moving path.

In an implementation, the UE having sent the path-related information includes at least one of:
the UE having sent the path-related information to the network device since entering a connected state;
the UE having sent the path-related information to the network device since entering a current serving cell e;
the UE having sent the path-related information to the network device since being configured to send the indication information;
the UE having sent the path-related information to the network device through specific information since being configured to send the indication information;
the UE having sent the path-related information to the network device since receiving configuration information for the indication information;
the UE having sent the path-related information to the network device since receiving configuration information for the path-related information.

The UE is able to determine whether it has entered the connected state and the time of entering the connected state, the time of entering the current serving cell, the time when it is configured to send the indication information, and the time of receiving the configuration for the indication information. The UE may determine whether the path-related information has been sent to the network device since the UE entered the connected state, whether the path-related information has been sent to the network device since the UE entered the current serving cell, whether the path-related information has been sent to the network device since the UE was configured to send the indication information, whether the path-related information has been sent to the network device through the specific information since the UE was configured to send indication information, and whether the path-related information has been sent to the network device since the UE received the configuration for the indication information.

The specific information may include UAI or other information.

In an embodiment, in response to the UE not having the available moving path, the UE having sent the path-related information, and the sent available moving path being invalid, the indication of unavailability is sent to the network device, in which the indication of unavailability indicates that the sent available moving path is unavailable.

In an implementation, the sent available moving paths include the available moving paths sent last time.

In an implementation, the sent available moving path becoming invalid includes that a control mode of the UE is switched from moving according to the last sent available moving path to a manual control.

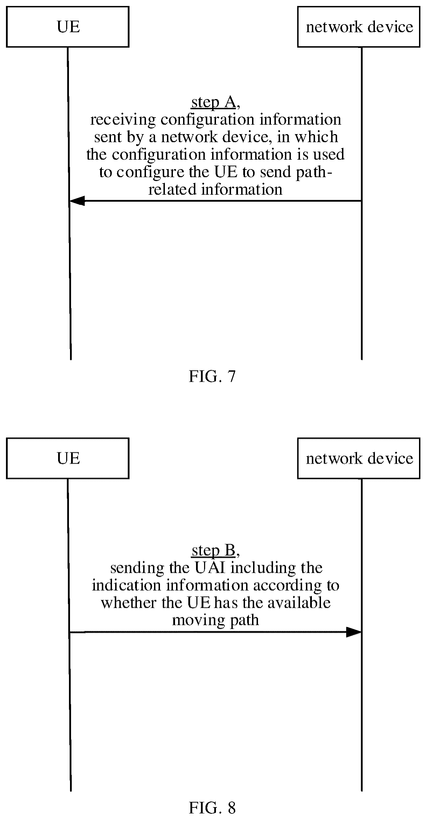

In an embodiment, referring to FIG. 7, which is a schematic diagram of an information processing method. The method further includes:
step A: receiving configuration information sent by a network device, in which the configuration information is used to configure the UE to send path-related information, in which the path-related information includes indication information and/or path information of a moving path. The indication information indicates whether the UE has an available or acquirable moving path, and the path information is related information of the moving path itself.

The configuration information may be sent by the network device, and the indication information may include an indication of availability and an indication of unavailability.

In an implementation, the configuration information may include one or more of a radio resource control reconfiguration message (RRCReconfiguration), a radio resource control reestablishment message (RRCReestablishment), a radio resource control handover message (RRCResume), and a radio resource control setup message (RRCSetup message). When the UE receives these messages, if the UE has the available moving path, the UE sends the path-related information, such as the indication information or the path information, via these messages.

In an embodiment, the UE may also receive a radio resource control reconfiguration message (RRCReconfiguration) sent by the network device, where the radio resource control reconfiguration message (RRCReconfiguration) includes configuration information.

In an embodiment, the UE reports the path-related information, such as the indication information, via UE Assistance Information (UAI).

In an implementation, the configuration information includes reporting configuration of the path-related information. The UE reports the path-related information, such as indication information, via the UAI according to the reporting configuration. The indication information may include the indication of availability.

In an implementation, the UE is configured to report the indication information via the UAI, and the configuration information includes a preset value, such as the reporting configuration is release.

The configuration information includes the reporting configuration, and the reporting configuration is the preset value, such as release, and the UE is configured to report the indication information via the UAI.

In an implementation, the configuration information does not include the preset value, such as the preset value of the reporting configuration being release, and the UE is not configured to report the indication information via the UAI.

If the configuration information does not include the reporting configuration with the preset value of release, the UE is not configured to report the indication information via the UAI.

In an embodiment, the UE receives information or a message sent by the network, where the information or the message sent by the network is used to trigger or configure the UE to report flight path-related information. Reference can be made to FIG. 7, in which step A is mentioned.

In an implementation, the flight path-related information is flight path indication information.

In an implementation, the flight path indication information may be a flight path available indication (or a flight path acquirable indication), in which the indication information indicates whether the UE has available or acquirable flight path information.

In an implementation, the flight path indication information may be a flight path unavailable indication, in which the indication information indicates whether the flight path information of the UE is unavailable.

In an implementation, the flight path indication information may be a flight path update indication, in which the indication information indicates whether the UE updates the flight path information.

In an implementation, the flight path available indication may be used to indicate a flight path update, i.e., the UE has a new flight path. That is, the flight path update indication information is the flight path available indication.

In an implementation, the flight path available indication may be a field: flightPathInfoAvailable.

In an implementation, if the message or information sent by the UE to the network is configured with or includes the flight path available indication, it means that the UE has the available or acquirable flight path.

In an implementation, based on a protocol provision or a request of the network device, the UE may configure or include the flight path available indication in a specific message. If the specific message does not include the flight path available indication, it indicates that the UE does not have the available or acquirable flight path.

In an implementation, if the flight path available indication in the message or information sent by the UE to the network device is a specific value (e.g., true), it means that the UE has the available or acquirable flight path; otherwise, it means that the UE does not have the available or acquirable flight path.

In an implementation, the message sent by the network device may be one or more of a radio resource control reconfiguration message (RRCReconfiguration), a radio resource control reestablishment message (RRCReestablishment), a radio resource control handover message (RRCResume), or a radio resource control setup message (RRCSetup message). When the UE receives these messages, if the UE has the available flight path, the UE reports the flight path available indication via these messages.

In an implementation, the information sent by the network side may be first configuration information, where the first configuration information is used to configure the UE to report the flight path-related information. The first configuration information may be included in the RRCReconfiguration message.

In an implementation, the first configuration information includes the reporting configuration of the flight path-related information, which is used to configure the UE to report the flight path-related information via UAI.

In an implementation, the flight path-related information is the flight path available indication. The first configuration information includes the reporting configuration of the flight path indication information, which is used to configure the UE to report the flight path indication information via the UAI.

For example, the reporting configuration including the flight path indication information in the first configuration information is used to configure the UE to report the flight path available indication, the flight path unavailable indication and/or the flight path update indication via the UAI.

For example, the first configuration information includes the reporting configuration of the flight path available indication information, which is used to configure the UE to report the flight path available indication via the UAI.

For example, the first configuration information includes the reporting configuration of the flight path available indication information, which is used to configure the UE to report the flight path available indication, the flight path unavailable indication, and/or the flight path update indication via the UAI.

In a possible implementation, if the first configuration information includes the reporting configuration of the flight path available indication information, and if this configuration is set to setup, it is considered that the UE is configured to report the flight path available indication via the UAI; if this configuration is not set to setup, it is considered that the UE is not configured to report the flight path available indication.

In an embodiment, based on step 103 of in FIG. 4, a method for reporting, by the UE, the flight path available indication to the network device includes:
when the UE is configured to report the flight path available indication, if the flight path-related information has not been reported and the UE has the available flight path, reporting the flight path available indication.

The flight path-related information includes, but is not limited to, one or more of the flight path available indication and the flight path.

In an implementation, the UE is configured to report the flight path available indication. Based on step 103 in FIG. 4 , the method includes:
when the UE is configured to report the flight path available indication, if the flight path available indication has not been reported and the UE has the available flight path, reporting the flight path available indication.

In an implementation, when the UE is configured to report the flight path available indication, if the flight path has not been reported and the UE has the available flight path, the flight path available indication is reported.

In an implementation, the flight path-related information having not been reported includes, but is not limited to, one or more of:
the flight path-related information having not been reported since the UE entered a connected state;
the flight path-related information having not been reported since the UE accessed a current serving cell;
the flight path-related information having not been reported since the UE was configured to report the flight path available indication; or
the flight path-related information having not been reported since the UE received one or more messages sent by the network to trigger or configure the UE to report flight path-related information.

In an implementation, if the UE is configured to report the flight path available indication via the UAI, for example, based on the method described in step B in FIG. 8, the method is configured to report via the UAI.

In an implementation, if the UE has the available flight path and the UE has not reported the flight path available indication via the UAI, the flight path available indication is reported.

In an implementation, the flight path available indication having not been reported via the UAI includes, but is not limited to, one or more of:
the flight path available indication having not been reported via the UAI since the UE entered a connected state;
the flight path available indication having not been reported via the UAI since the UE accessed a current serving cell;
the flight path available indication having not been reported via the UAI since the UE was configured to report the flight path available indication; or
the flight path available indication having not been reported via the UAI since the UE received one or more messages sent by the network to trigger or configure the UE to report flight path-related information

In an implementation, when the UE is configured to report the flight path available indication, if the UE has the available flight path, and the UE has not sent the UAI containing the flight path available indication or the flight path-related information since being configured to report the flight path available indication, the UAI sending process is initiated to provide the network with the flight path available indication. The flight path available indication is included in the UAI, or the flight path available indication is set to a specific value of true and then the UAI is sent.

In an implementation, if the UE has the available flight path information, and the UE does not report the flight path available indication in the most recently sent completion message, the UE reports the flight path available indication via the UAI. Alternatively, if the UE has the available flight path information and the UE does not report the indication in the corresponding completion message, the UE reports the flight path available indication via the UAI.

The completion message includes, but is not limited to, one or more of a radio resource control reconfiguration complete message (RRCReconfigurationComplete), a radio resource control reestablishment complete message (RRCReestablishmentComplete), a radio resource control handover message (RRCResumeComplete), or a radio resource control setup complete message (RRCSetupComplete).

In an implementation, if the UE is configured to report the flight path available indication, the UE has the available flight path information, and the UE does not report the flight path available indication in the most recently sent completion message, the UE reports the flight path available indication via the UAI. Alternatively, if the UE is configured to report the flight path available indication, the UE has the available flight path information, and the UE does not report the indication in the corresponding completion message, the UE reports the flight path available indication via the UAI,

In an embodiment, another method for reporting, by the UE, the flight path indication information to the network is provided. Based on step S103 in FIG. 4, the method includes:
when the UE is configured to report the flight path indication information, if the flight path of the UE is changed, reporting the flight path available indication.

The flight path of the UE being changed includes, but is not limited to, one or more of:
the available flight path being updated; or
the UE having new available flight path.

In this case, the flight path available indication may also be referred to as the flight path update indication.

In an implementation, the UE is configured to report the flight path indication information, which can be determined based on step 103 in FIG. 4.

In an implementation, the flight path of the UE is changed, which means that the currently available flight path is changed compared with the most recently reported available flight path.

For example, the current available flight path being changed compared to the most recently reported available flight path includes, but not limited to, one or more of:
the current flight path being changed compared to the most recently reported flight path, which may mean that any path point in the most recently reported flight path is not included in the currently available flight path; or
the current flight path being changed compared to the most recently reported flight path, which may mean that any X or more path points in the most recently reported flight path are not included in the currently available flight path, where X may be configured by the network, specified by a protocol, or determined by other means, which is not limited in the present disclosure.

The current flight path is changed compared to the most recently reported flight path, which may mean that all path points in the most recently reported flight path are not included in the currently available flight path.

In an implementation, a path point corresponds to a piece of position information, or the path point corresponds to a piece of position information and/or a piece of time information, such as a timestamp. The path point may also correspond to other information, such as direction information. The present disclosure does not limit the specific information contained in the path point.

In an implementation, the path point is not included in the currently available flight path, which may include: the position information of the path point is not included in the currently available flight path. For example, the currently available flight path does not pass through the position indicated by the position information.

In an implementation, the path point is not included in the currently available flight path, which means that the position information and time information of the path point are not included in the currently available flight path. For example, the current flight path does not pass through the position indicated by the position information, or the current flight path passes through the position indicated by the position information, but a corresponding time is not the time indicated by the time information.

The following are some specific examples of how the flight path of the UE is changed, and the specific implementation is not limited to these examples.

For example, if the waypoints in the most recently reported available flight path include Point A, Point B, Point C, Point D, and Point F, and the waypoints in the currently available flight path include Point A, Point M, Point B, Point C, Point D, Point F, and Point E, then the currently available flight path has not changed compared to the most recently reported available flight path, and there is no need to report the flight path available indication.

For example, the waypoints in the most recently reported available flight path include point A, point B, point C, point D, and point F, and the waypoints in the currently available flight path include point A, point C, point F, and point E. Then, the currently available flight path is changed compared to the most recently reported available flight path, and the flight path available indication is reported.

For example, the most recently reported flight path includes Point A, Point B, Point C, Point D, and Point F. The currently available flight path does not include Point B and Point C, but includes Point A, Point D, and Point F. Therefore, the currently available flight path is changed compared to the most recently reported available flight path, and the flight path available indication is reported.

In another implementation, the current flight path is changed compared to the most recently reported flight path, which may mean that the position deviation and/or time deviation between the current available flight path and the historical available flight path reaches the threshold value.

For example, the position deviation and/or time deviation between the current available flight path and the historical available flight path reaching the threshold value may specifically include but is not limited to one or more of the following situations.

In an implementation, the current flight path is changed compared to the most recently reported flight path, which may mean that the position deviation between any one (or any X) waypoint (position and related timestamp) in the most recently reported flight path and the position in the currently available flight path is greater than or equal to the first threshold value.

In an implementation, the position deviation means that at a time corresponding to the reported waypoint, a distance between a position corresponding to the current flight path and a position of the reported waypoint is greater than the first threshold value. If the distance is greater than or equal to the first threshold value, the flight path available indication is reported.

In an implementation, the current flight path is changed compared to the most recently reported flight path, which may mean that the time deviation between any one (or any X) waypoint (position and related timestamp) in the most recently reported flight path and the currently available flight path is greater than or equal to the second threshold value.

In an implementation, the time deviation means that, at a position corresponding to the waypoint of the most recently reported available flight path, a time difference between the time of passing the corresponding waypoint of the current available flight path and the time of passing the corresponding waypoint in the most recently reported available flight path. If the time difference is greater than the second threshold value, the flight path available indication is reported.

In an implementation, if the UE is configured to report the flight path available indication via the UAI, for example, it is configured to report via the UAI, through the method described in step 1 in Figure X.

In an implementation, when the UE is configured to report the flight path available indication via the UAI, if the UE has the available flight path and the current available flight path is changed compared to the most recently reported flight path, the UAI sending process is initiated to provide the network with the flight path available indication. The flight path available indication is included in the UAI, or the flight path available indication is set to the specific value of true and then the UAI is sent.

In an implementation, when any waypoint (position and related timestamp) reported most recently is not included in the currently available flight path information, the UE reports the flight path available indication or the flight path update indication via the UAI.

In an embodiment, referring to step S104 in FIG. 6, a method for reporting, by the UE, the flight path indication information to the network includes:
when the UE is configured to report the flight path indication information, if flight path-related information has been reported before and the UE does not have the available flight path, reporting the flight path unavailable indication.

The flight path-related information includes, but is not limited to, one or more of the flight path available indication or path information of the flight path.

In an implementation, the UE having reported the flight path-related information includes, but is not limited to, one or more of:
the UE having reported the flight path-related information since entering the connected state;
the UE having reported the flight path-related information since accessing the current serving cell;
the UE having reported the flight path-related information since being configured to report the flight path available indication; or
the UE having reported the flight path-related information since receiving one or more messages sent by the network to trigger or configure the UE to report the flight path-related information.

In an implementation, when the UE is configured to report the flight path available indication, if the flight path has been reported before, but the most recently reported flight path is invalid and the UE currently has no available flight path, the flight path unavailable indication is reported.

In an implementation, when the UE is configured to report the flight path unavailable indication, if the flight path-related information has been reported before, and the most recently reported flight path is invalid and the UE currently has no available flight path, the flight path unavailable indication is reported.

In an implementation, when the UE is configured to report the flight path indication information, if the flight path has been reported before, and the most recently reported flight path is invalid and the UE currently has no available flight path, the flight path unavailable indication is reported.

For example, the flight path is invalid and the UE currently has no available flight path, which may be caused by the UAV UE switching from flying according to the planned path to being controlled by an operator or user.

In an embodiment, referring to FIG. 8, which shows another schematic diagram of sending the indication information to the network device, the method includes:
step B: sending the UAI including the indication information according to whether the UE has the available moving path.

In an implementation, in response to the UE having the available moving path and the UE not having sent the indication of availability in the indication information via the UAI, the UAI including the indication information is sent.

In an implementation, the UE having not sent the indication of availability in the indication information via the UAI, including:
the UE having not sent the indication of availability via the UAI since entering the connected state;
the UE having not sent the indication of availability via the UAI since entering a current serving cell;
the UE having not sent the indication of availability via the UAI since being configured to send the indication information;
the UE having not sent the indication of availability via the UAI since receiving configuration information for the indication information; or
the UE having not sent the indication of availability via the UAI since receiving configuration information for the path-related information.

In an embodiment, in response to the UE having the available moving path and the UE not having sent the UAI including the path-related information, the UAI including the indication of availability is sent.

In an embodiment, in response to the UE having the available moving path and the available moving path being updated, the UAI including the indication information is sent.

In an embodiment, in order to enhance mobility, in the LTE UAV, the network device requests the UE, via an RRC message, to report the planned available flight path to the network device (such as an eNB or gNB). The UE may indicate the positions where the UE plans to move in the future by reporting the available flight path. As for the mobility of the UE, the base station may configure the mobility, such as handover, for the UE according to the available flight path reported by the UE.

For example, based on the available flight path reported by the UE, the base station may know in advance which cell to use as a target cell for the UE to access. The UAV flies according to the pre-configured available flight path, and when the UAV arrives at a position adjacent to an edge of the current serving cell, or even before the UAV reaches the edge of the current serving cell, the current serving base station may start performing handover preparation with a neighboring target base station. For example, the target base station within a target base station range of the next path point in the moving path is determined, the UE context is forwarded in advance, and radio resources are pre-configured for the UE in the target base station, and then a handover command is sent to the UE under a high-quality radio link condition. In this way, the probability of handover failure is reduced when the UAV performs handover on the available flight path.

In an embodiment, an initial flight path information available or acquirable indication, such as a flight path information available indication, is triggered to be reported. This indication indicates that there is currently a flight path available to the UE. This indication information is sent by the UE to the network device.

In an implementation, whether to report the flight path available indication is determined according to whether flight path-related information has been reported.

In an implementation, if the UE has not reported flight path information, and the flight path is available, then the flight path available indication is reported.

In an implementation, if the UE has not reported the flight path available indication, and the flight path is available, then the flight path available indication is reported.

In an embodiment, reporting of the flight path available indication is triggered after the flight path is updated. This indication information indicates that there is a flight path being currently available to the UE. This indication information is sent by the UE to the network deice. This indication information may be used to indicate that the UE has a new available flight path.

In an implementation, whether to report the flight path available indication is determined according to whether the flight path information is changed.

In an implementation, if the flight path is available, i.e., the UE has the available flight path, and the current flight path is changed compared to the most recently reported flight path, then the flight path available indication is reported.

The current available flight path having changed compared to the most recently reported available flight path means that: each waypoint in the most recently reported available flight path is not included in the current available flight path. The path information corresponding to the last sent flight path and the path information corresponding to the currently available flight path both include: position information of path points. Alternatively, the path information includes: position information and time information of the path points. The time information indicates the time where the path points are planned to be passed.

In an embodiment, if the flight path is unavailable, i.e., the flight path is not available to the UE, the UE may report the flight path unavailable indication, in which the flight path unavailable indication indicates that the most recently reported flight path is unavailable.

In an embodiment, the UE receives the configuration information sent by the network device, where the configuration information is used to trigger or configure the UE to report the flight path-related information.

In an implementation, the flight path-related information includes the indication information. The indication information may include the flight path available indication or the flight path acquirable indication, and the indication information indicates whether there is the available flight path or acquirable flight path information for the UE.

In an implementation, the flight path available indication may be a field: flightPathInfoAvailable.

In an implementation, the message or information sent by the UE to the network device includes the flight path available indication, which indicates that the UE has the available or acquirable flight path.

In an implementation, based on the protocol provision or the request from the network device, the UE may include the flight path available indication in the specific message. If not included, it indicates that the UE has no available flight path or acquirable flight path.

In an implementation, if the flight path available indication in the message or information sent by the UE to the network device is a specific value (e.g., true), it indicates that there is the available flight path or the acquirable flight path for the UE. Otherwise, it means that there is no available flight path or acquirable flight path for the UE.

In an implementation, the configuration information may be one or more of a radio resource control reconfiguration message (RRCReconfiguration), a radio resource control reestablishment message (RRCReestablishment), a radio resource control handover message (RRCResume), or a radio resource control setup message (RRCSetup message).

When the UE receives these messages, if there is an available flight path for the UE, the UE reports a flight path available indication through these messages.

In an implementation, the UE may also receive the radio resource control reconfiguration message (RRCReconfiguration) sent by the network device. The configuration information may be included in the RRCReconfiguration message, and the configuration information is used to configure the UE to report the flight path-related information.

In an implementation, the UE reports the flight path-related information via the UAI.

The configuration information includes a reporting configuration of the flight path-related information, and the reporting configuration is used to configure the UE to report the flight path-related information via the UAI.

In an implementation, the flight path-related information is the flight path available indication. The configuration information includes the reporting configuration of the flight path available indication, and the reporting configuration is used to configure the UE to report the flight path available indication via the UAI.

In an implementation, if the configuration information includes the reporting configuration of the flight path available indication information, and the reporting configuration is release, the UE is configured to report the flight path available indication via the UAI. If the reporting configuration is not release, the UE is not configured to report the flight path available indication.

In an embodiment, when the UE is configured to report the flight path available indication, if the flight path-related information has not been reported and the UE has the available flight path, the flight path available indication is reported.

The flight path-related information includes one or more of: the flight path available indication or the flight path information of the flight path.

In an embodiment, when the UE is configured to report the flight path available indication, if the UE has not reported the flight path available indication and the UE has the available flight path, the flight path available indication is reported.

In an embodiment, when the UE is configured to report the flight path available indication, if the path information of the flight path has not been reported and the UE has the available flight path, the flight path available indication is reported.

In an embodiment, the flight path-related information having not been reported includes one or more of:
the flight path-related information having not been reported since the UE entered the connected state
the flight path-related information having not been reported since the UE accessed the current serving cell;
the flight path-related information having not been reported since the UE was configured to report the flight path available indication; or
the flight path-related information having not been reported since the UE received one or more messages sent by the network device for triggering or configuring the UE to report the flight path-related information.

In an embodiment, the UE is configured to report the flight path available indication via the UAI. If the UE has the available flight path and the UE has not reported the flight path available indication via the UAI, the flight path available indication is reported.

In an implementation, the flight available indication having not been reported via the UAI includes one or more of:
the flight available indication having not been reported via the UAI since the UE entered the connected state;
the flight available indication having not been reported via the UAI since the UE accessed the current serving cell;
the flight available indication having not been reported via the UAI since the UE was configured to report the flight path available indication; or
the flight available indication having not been reported via the UAI since the UE received one or more messages sent by the network side for triggering or configuring the UE to report the flight path-related information.

In an embodiment, when the UE is configured to report the flight path available indication, if the UE has the available flight path, and the UE has not sent the UAI containing the flight path available indication or the flight path-related information since being configured to report the flight path available indication, the UAI sending process is initiated to provide the network with the flight path available indication.

In an implementation, the flight path available indication is included in the UAI, or the flight path available indication is a specific value of true, and then the UAI is sent.

In an embodiment, when the UE is configured to report the flight path available indication, if the available flight path of the UE is changed, such as the available moving path of the UE is updated or the UE has a new available flight path, the flight path available indication is reported. The flight path available indication here is also called the flight path change indication.

In an embodiment, the flight path of the UE being changed, and the current available flight path being changed compared to the most recently reported available flight path, includes:
each (or X) waypoint in the most recently reported available flight path is not included in the current available flight path, where X may be configured by the network device.

For example, if the waypoints in the most recently reported available flight path include Point A, Point B, Point C, Point D, and Point F, and the waypoints in the currently available flight path include Point A, Point M, Point B, Point C, Point D, Point F, and Point E, then the currently available flight path has not changed compared to the most recently reported available flight path, and there is no need to report the flight path available indication.

For example, the waypoints in the most recently reported available flight path include point A, point B, point C, point D, and point F, and the waypoints in the currently available flight path include point A, point C, point F, and point E. Then, the currently available flight path is changed compared to the most recently reported available flight path, and the flight path available indication is reported.

For example, the most recently reported flight path includes Point A, Point B, Point C, Point D, and Point F. The currently available flight path does not include Point B and Point C, but includes Point A, Point D, and Point F. Therefore, the currently available flight path is changed compared to the most recently reported available flight path, and the flight path available indication is reported.

In an implementation, the waypoint includes position information and time information, or only includes the position information.

In an embodiment, the current flight path is changed compared to the most recently reported flight path, which may mean that the position deviation between any one (or any X) waypoint (position and related timestamp) in the most recently reported flight path and the position in the currently available flight path is greater than or equal to the first threshold value.

The position deviation means that at a time corresponding to the waypoint in the most recently reported available flight path, a distance between a position corresponding to the current available flight path and a position of the corresponding waypoint in the most recently reported available flight path. If the distance is greater than or equal to the first threshold value, the flight path available indication is reported.

In an embodiment, the current flight path is changed compared to the most recently reported flight path, which may mean that the time deviation between any one (or any X) waypoint (position and related timestamp) in the most recently reported flight path and the currently available flight path is greater than or equal to the second threshold value.

The time deviation means that, at a position corresponding to the waypoint of the most recently reported available flight path, a time difference between the time of passing the corresponding waypoint of the current available flight path and the time of passing the corresponding waypoint in the most recently reported available flight path. If the time difference is greater than the second threshold value, the flight path available indication is reported.

In an embodiment, when the UE is configured to report the flight path available indication via the UAI, if the UE has the available flight path and the current available flight path is changed compared to the most recently reported available flight path, the UAI sending process is initiated, to send the flight path available indication to the network device via the UAI. The flight path available indication is included in the UAI, or the flight path available indication is set to a specific value of true, and then the UAI is sent.

In an embodiment, when the UE is configured to report the flight path available indication, if the flight path-related information has been reported before and the flight path is not available to the UE, the flight path unavailable indication is reported.

The flight path-related information includes one or more of the flight path available indication, the flight path unavailable indication, or path information of the flight path.

In an implementation, the UE having reported the flight path-related information includes one or more of:
the UE having reported the flight path-related information since entering the connected state;
the UE having reported the flight path-related information since accessing the current serving cell;
the UE having reported the flight path-related information since being configured to report the flight path available indication; or
the UE having reported the flight path-related information since receiving one or more messages sent by the network to trigger or configure the UE to report the flight path-related information.

In an embodiment, when the UE is configured to report the flight path available indication, if the flight path-related information has been reported before, but the most recently reported flight path is invalid and the UE currently has no available flight path, the flight path unavailable indication is reported.

In an implementation, when the most recently reported flight path is invalid and the UE currently has no available flight path, the UAV is switched from flying according to the planned path to being controlled by an operator or user.

The solution of embodiments proposes the methods for triggering reporting of the flight path available indication, clarifies the reporting method of the initial flight path available indication and the triggering conditions for triggering the reporting of the flight path available indication after the flight path update.

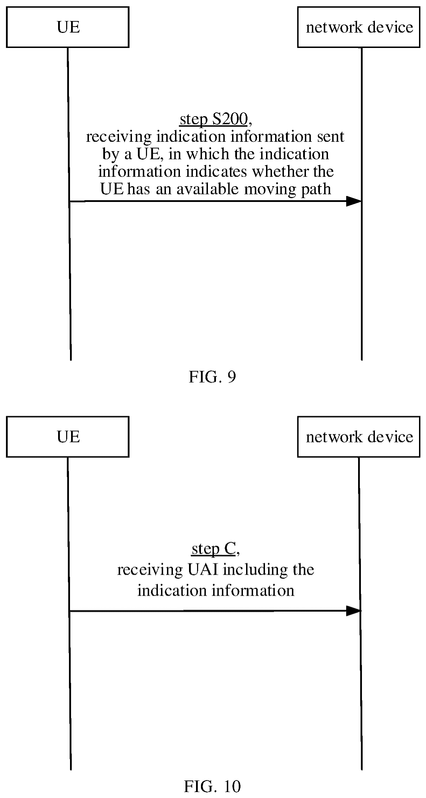

In an embodiment, referring to FIG. 9, which is a schematic diagram of an information processing method, the method is applicable to a network device, and the method includes:
step S200: receiving indication information sent by a UE, in which the indication information indicates whether the UE has an available moving path.

In an implementation, the network device may include a base station, which may be an evolved node base station (eNB), or a network device in a 5G system, such as a next generation node base station (gNB), or a transmission and reception point (TRP) or other devices, or a network device in a subsequent evolved communication system.

In an implementation, a moving path may include a flight path and a ground moving path, and the UE may automatically acquire its own moving path.

The form of the indication information is not limited and may be determined according to actual usage requirements. It may be a field, a value, or other forms of information.

In an implementation, the indication information may be information indicating that the UE has the available moving path, or may be information indicating that the UE does not have the available moving path.

The UE may be a flight device or a ground-moving device. The ground-moving device includes but is not limited to a vehicle-mounted device, etc. As an example, the UE may be an unmanned aerial vehicle (UAV).

The information processing method provided by the above-mentioned embodiment of the present disclosure improves the convenience of the network device in receiving the indication information and reduces the process of sending the request to the UE, thereby facilitating the network device to prepare for handover between the current serving cell and the target cell in advance before the UE enters the target cell.

In an embodiment, determining that the UE has the available moving path includes:
in response to receiving the indication information sent by the UE, determining that the UE has the available moving path.

In this embodiment, the indication information is specifically used to indicate that the UE has the available moving path. Therefore, upon receiving the indication information, it is considered that the UE has the available moving path.

In an embodiment, determining that the UE does not have the available moving path includes:
in response to not receiving the indication information sent by the UE, determining that the UE does not have the available moving path.

In this embodiment, the indication information is specifically used to indicate that the UE has an available moving path. Therefore, if the indication information is not received, it is considered that the UE does not have the available moving path.

In an implementation, based on a communication protocol or a request message sent by the network device, the UE sends a specific message to the network device. The network device determines that the specific message is not configured with or does not contain the indication information, and then determines that the UE does not have the available or acquirable moving path. The specific message may include: an RRC message, a MAC layer message or uplink control information (UCI), etc.

In an embodiment, the indication information includes an indication of availability, and/or an indication of unavailability;

The indication of availability indicates that the UE has the available moving path.

The indication of unavailability indicates that the UE does not have the available moving path

The indication of availability and the indication of unavailability may be carried by the same field or information element (IE). Alternatively, it can be carried in different fields or IEs.

In an embodiment, determining that the UE has the available moving path includes:

in response to receiving the indication of availability, determining that the UE has the available moving path.

In an embodiment, determining that the UE has the available moving path includes:

In response to receiving the indication of unavailability, determining that the UE does not have the available moving path.

In an embodiment, in response to receiving the indication of availability, determining that the UE has the available moving path, includes at least one of:
in response to receiving the indication of availability and having not received path-related information, determining that the UE has the available moving path; or

in response to receiving the indication of availability and having received the path-related information, determining that the available moving path of the UE is updated. After determining that the available moving path of the UE is updated, the network device may determine that the previous available moving path is no longer applicable, which makes it easier for the network device to determine that the UE has a new available moving path and reduces the situation where the network device continues to perform handover of the target cell for the UE through the previous available moving path.

The path-related information includes one or more of the indication of availability, the indication of unavailability, and path information of the moving path.

In an implementation, in response to receiving the indication of availability and the indication of availability having not been received before, it is determined that the UE has the available moving path. Here, the indication of availability having not been received before includes: the network device having never received the indication of availability sent by the UE, and the indication of availability here is an initial indication of availability.

In an implementation, in response to receiving the indication of availability and the path information of the moving path having not been received before, it is determined that the UE has the available moving path.

In an embodiment, the path-related information having not been received includes at least one of:
the path-related information having not been received since the UE entered a connected state;
the path-related information having not been received since the UE entered a current serving cell;
the path-related information having not been received since the UE was configured to send the indication information;
the path-related information having not been received through specific information since the UE was configured to send the indication information;
the path-related information having not been received since the UE received configuration information for the indication information;
the path-related information having not been received since the UE received the configuration information for the path-related information.

In an embodiment, the path-related information includes one or more of the indication of availability, the indication of unavailability, or path information of the moving path.

In an embodiment, determining that the available moving path of the UE is update includes at least one of:
when a current available moving path does not include at least one path point of a historical available moving path, determining that the available moving path of the UE is updated; or
when a position deviation and/or a time deviation between the current available moving path and the historical available moving path reaches a threshold value, determining that the available moving path of the UE is updated.

In an embodiment, the moving path includes at least one path point. The path point includes a waypoint. The current available moving path includes at least one path point, and the historical available moving path includes at least one path point. When the current available moving path does not include the at least one path point of the historical available moving path, that is, the at least one path point of the historical available moving path is not in the current available moving path, the available moving path of the UE is updated.

For example, the path points in the historical available moving path include point A, point B, point C, point D and point F, the path points in the current available moving path include point A, point M, point B, point C, point D, point F and point E. The path points in the current available moving path include all the path points in the historical available moving path, then the available moving path of the UE is not updated. The current available moving path is not changed relative to the historical available moving path, and the UE does not send the indication of availability.

For another example, the available moving path being updated does not include:
the current available moving path is added with a path point based on the path points included in the historical available moving path. The path points in the historical available moving path include point A, point B, point C, point D and point F, and the path points in the current available moving path include point A, point M, point B, point C, point D, point F and point E. The current available moving path is added with the path points M and E on the basis of the path points included in the historical available moving path, and thus the available moving path is not updated.

For another example, the path points in the historical available moving path include point A, point B, point C, point D and point F, the path points in the current available moving path include point A, point C, point F and point E. The path points in the current available moving path do not include point B, point D and point F in the historical available moving path, then the available moving path of the UE is updated. When the current available moving path is updated relative to the historical available moving path, the UE sends the indication of availability.

For another example, the path points in the historical available moving path include point A, point B, point C, point D and point F, the path points in the current available moving path include point A, point D and point F. The path points in the current available moving path do not include point B and point C in the historical available moving path, then the available moving path of the UE is updated. When the current available moving path is updated relative to the historical available moving path, the UE sends the indication of availability

In an implementation, the path information includes position information of the path points. Alternatively, the path information includes position information and time information of the path points. The time information indicates the time when the path points are planned to be passed.

In an implementation, there is provided a path point change threshold for the update of the available moving path, and the path point change threshold is related to the numerical count of path points in the historical available moving path that are not included in the current available moving path. The path point change threshold may be configured by the network device.

In an embodiment, the historical available moving path is the available moving path sent by the UE last time.

The position deviation between the current available moving path and the historical available moving path includes: a position deviation between a path point in the current available moving path and a path point in the historical available moving path.

For example, if the position deviation between the current available moving path and the historical available moving path is greater than or equal to a first threshold value, the available moving path of the UE is updated.

In an implementation, the update of the available moving path includes: the position deviation between a position of a first path point in the current available moving path and a position of a second path point in the historical available moving path is greater than or equal to a first threshold value, in which the time when the UE arrives at the first path point is the same as the time when the UE arrives at the second path point.

In an implementation, the position deviation between the current available moving path and the historical available moving path reaching the threshold value includes:
within a preset time difference range, a position deviation between at least one path point in the current available moving path and a corresponding path point in the historical available moving path is greater than or equal to the first threshold value. The preset time difference range here includes: a time difference range between the time when the UE passes through a path point in the current available moving path and the time when the UE passes through a corresponding path point in the historical available moving path.

In an embodiment, the position deviation between the current available moving path and the historical available moving path reaching the threshold value includes:
the position deviation between at least one path point in the current available path and the historical available moving path being greater than or equal to the first threshold value.

In an implementation, the position deviation between the at least one path point in the current available path and a corresponding path point in the historical available moving path is greater than or equal to the first threshold value.

In an embodiment, the time deviation between the current available moving path and the historical available moving path includes: a time deviation between the UE arriving at a path point in the current available moving path and the UE arriving at the same path point in the historical available moving path.

For example, when the time deviation between the current available moving path and the historical available moving path reaches the second threshold value, the available moving path of the UE is updated..

In an implementation, the updating of the available moving path includes: the time deviation between a time of a first waypoint in the current available moving path and a time of a second waypoint in the historical available moving path reaches a second threshold value. The first waypoint and the second waypoint are the same waypoint.

As an example, the time deviation refers to a time difference between the time corresponding to a waypoint in the current flight path and the time corresponding to the same waypoint in the historical available moving path. If the time deviation is greater than the second threshold value, the available moving path may be updated and the flight path available indication may be reported.

In an embodiment, the historical available moving path is an available moving path sent by the UE in the last time. The available moving path here is an available moving path indicated by path information sent by the UE to the network device in the last time.

In an embodiment, the time deviation between the current available moving path and the historical available moving path reaching the threshold value includes:
the time difference between a passing time of at least one path point in the current available path and a passing time of the corresponding path point in the historical available moving path being greater than or equal to the second threshold value.

In an implementation, the historical available moving path is an available moving path sent by the UE last time.

In an embodiment, the current available moving path not containing at least one path point of the historical available moving path includes:
some or all of the path points in the historical moving path are not included in the current moving path.

As an example, X path points among M path points included in the historical moving path are not included in the current moving path, X and M are positive integers, and X≤M.

In an embodiment, in response to receiving the indication of unavailability, determining that the UE does not have the available moving path includes:
in response to receiving the indication of unavailability and having received the path-related information, determining that the UE does not have the available moving path.

After receiving the indication of unavailability, it may be determined that the UE currently does not have the available moving path, which means that the path-related information previously received is no longer available. The network device may discard the path information of the available moving path previously reported by the UE, or does not configure or instruct the UE to report the path information of the available moving path based on the indication of availability previously reported by the UE. In an implementation, the path-related information includes one or more of the indication of availability, the indication of unavailability, or path information of the moving path.

In an implementation, the path-related information having been received includes at least one of :
the path-related information having been received since the UE entered the connected state;
the path-related information having been received since the UE entered the current serving cell;
the path-related information having been received since the UE was configured to send the indication information;
the path-related information having been received through specific information since the UE is configured to send indication information;
the path-related information having been received since the UE received configuration information for the indication information; or
the path-related information having been received since the UE received configuration information for the path-related information.

In an embodiment, as shown in FIG. 10, which is a schematic diagram of an information processing method, the method is applicable to a network device, and the method includes:
step C: receiving UAI including the indication information.

In an implementation, the indication information included in the UAI is a preset value, such as true, false, 1 or 0, etc.

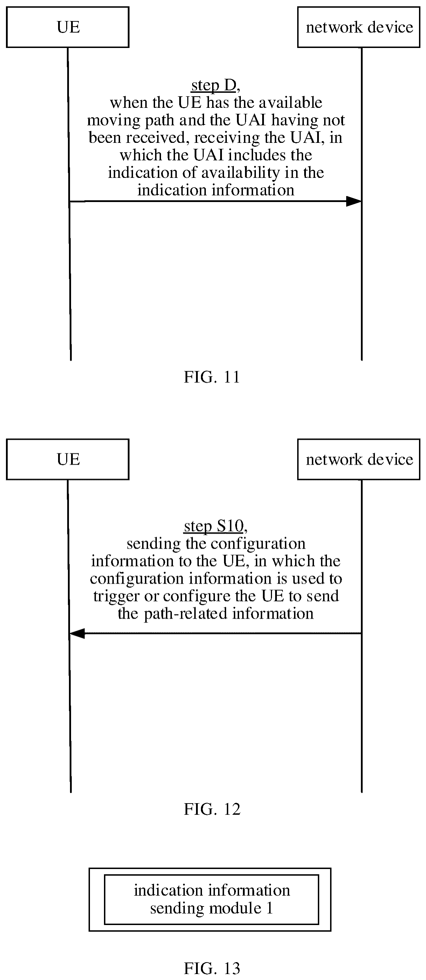

In an embodiment, as shown in FIG. 11, which is a schematic diagram of receiving the UAI including the indication information, the method includes:
step D: when the UE has the available moving path and the UAI having not been received, receiving the UAI, in which the UAI includes the indication of availability in the indication information.

In an embodiment, the UAI having not been received including:
the indication of availability having not been received via the UAI since the UE entered the connected state;
the indication of availability having not been received via the UAI since the UE entered the current serving cell;
the indication of availability having not been received via the UAI since the UE was configured to send the indication information;
the indication of availability having not been received via the UAI since the UE received configuration information for the indication information; or
the indication of availability having not been received via the UAI since the UE received configuration information for the indication information.

In an embodiment, referring to FIG. 12, which is a schematic diagram of another information processing method, the method includes:
step S10: sending the configuration information to the UE, in which the configuration information is used to trigger the UE to send the path-related information.

The path-related information may include indication information and/or path information of the moving path. The indication information indicates whether the UE has the available or acquirable moving path, and the path information is related information of the moving path itself.

In an implementation, the configuration information may include one or more of a radio resource control reconfiguration message (RRCReconfiguration), a radio resource control reestablishment message (RRCReestablishment), a radio resource control handover message (RRCResume), or a radio resource control setup message (RRCSetup message).

When the UE receives these messages, if the UE has the available moving path, the UE sends the path-related information, such as the indication information or the path information, via the UAI.

In an embodiment, the network device receives the UAI, in which the UAI includes the path-related information, such as the indication information.

In an implementation, the configuration information includes a reporting configuration of the path-related information. The UE reports the path-related information, such as the indication information, via the UAI according to the reporting configuration. The indication information may include the indication of availability.

In an implementation, the configuration information includes a preset value. For example, if the reporting configuration is release, the UE is configured to report the indication information via the UAI.

The configuration information includes the reporting configuration, and the reporting configuration is a preset value, such as release, and the UE is configured to report the indication information via the UAI.

In an implementation, the configuration information does not include the preset value, such as the preset value of the reporting configuration being release, and the UE is not configured to report the indication information via the UAI.

If the configuration information does not include the reporting configuration with the preset value of release, the UE is not configured to report the indication information via the UAI.

In an embodiment, as shown in FIG. 13, which is a schematic diagram of an information processing apparatus, the apparatus is applied to a UE, and the apparatus includes:
an indication information sending module 1, configured to send indication information to a network device according to whether the UE has an available moving path, in which the indication information indicates whether the UE has the available moving path.

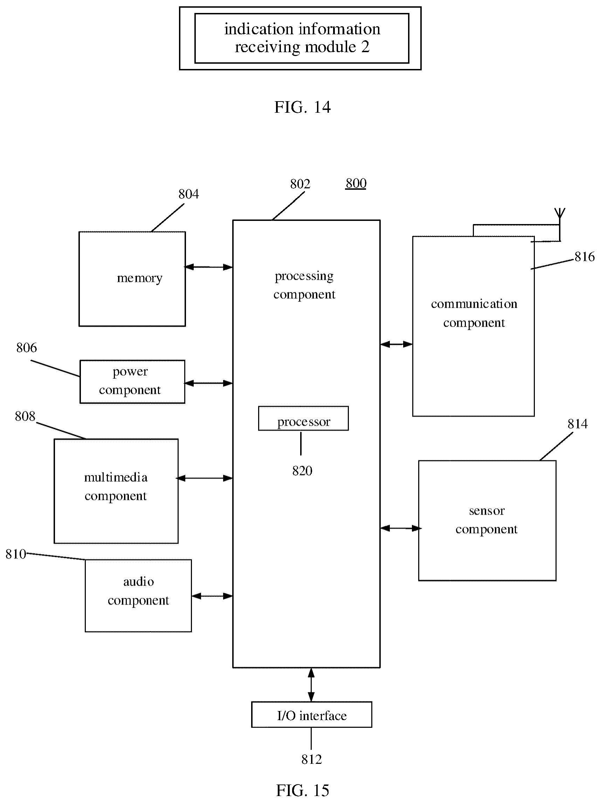

In an embodiment, as shown in FIG. 14, which is a schematic diagram of another information processing apparatus, the apparatus is applied to a network device, and the apparatus includes:
an indication information receiving module 2, configured to receive indication information sent by the UE; in which the indication information indicates whether the UE has an available moving path.

In an embodiment, a communication device is provided. The device includes a processor, a transceiver, a memory, and an executable program stored in the memory and capable of being run by the processor, in which the processor executes the information processing method provided in any of the above embodiments when running the executable program.

In an embodiment, a computer storage medium is provided. The computer storage medium stores an executable program. After the executable program is executed by a processor, the information processing method provided in any of the above embodiments is implemented.

FIG. 15 is a block diagram of a UE 800 according to an example embodiment. For example, the UE 800 may be a mobile phone, a computer, digital broadcast user equipment, a messaging device, a game console, a tablet device, a medical device, a fitness device, a personal digital assistant, etc.

Referring to FIG. 15, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above methods. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions for any application or method operating on the UE 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power supply component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 808 includes a front-facing camera and/or a rear-facing camera. When the UE 800 is in an operation mode, such as a photographing mode or a video mode, the front camera and/or the rear camera may receive external multimedia data. Each of the front-facing camera and the rear-facing camera may be a fixed optical lens system or may have variable focal length and optical zoom capabilities.

The audio component 810 is configured to output and/or input audio signals. For example, the audio component 810 includes a microphone (MIC) configured to receive an external audio signal when the UE 800 is in an operation mode, such as a call mode, a recording mode, and a speech recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, etc. These buttons may include, but are not limited to: a home button, a volume button, a start button, and a lock button.

The sensor component 814 includes one or more sensors for providing state assessment of various aspects for the UE 800. For example, the sensor component 814 may detect the open/closed state of the device 800, the relative positioning of components, such as the display and keypad of the UE 800, the sensor component 814 may also detect the position change of the UE 800 or a component of the UE 800, the presence or absence of user contact with the UE 800, the orientation or acceleration/deceleration of the UE 800 and the temperature change of the UE 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communications between the UE 800 and other devices. The UE 800 may access a wireless network based on communication standards, such as WiFi, 2G or 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an example embodiment, the UE 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, there is also provided a non-transitory computer-readable storage medium including instructions, such as the memory 804 including instructions, and the above instructions may be executed by the processor 820 of the UE 800 to generate the above methods. For example, the non-transitory computer-readable storage medium may be a ROM, a random access memory (RAM), a CD-ROM, a magnetic tape, a floppy disk, an optical data storage device, and the like..

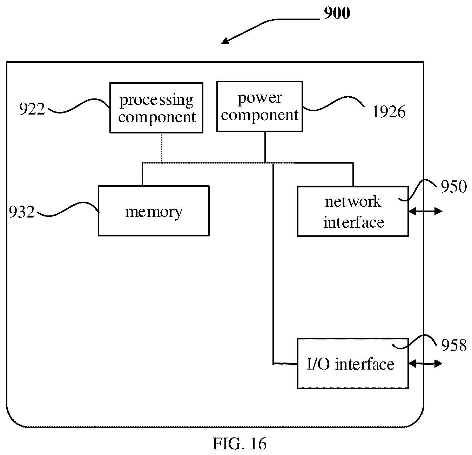

As shown in FIG. 16, an embodiment of the present disclosure provides a structure of an access device. For example, the communication device 900 may be provided as a network device. The communication device may be various network elements, such as the aforementioned access network element and/or network function.

Referring to FIG. 16, the communication device 900 includes a processing component 922, which further includes one or more processors, and a memory resource represented by a memory 932 for storing instructions executable by processing component 922, such as an application program. The application program stored in the memory 932 may include one or more modules each corresponding to a set of instructions. In addition, the processing component 922 is configured to execute instructions to perform the above-mentioned methods applied to the access device, for example, any one of the methods shown in Figures 4 to 9.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server ^{™} , Mac OS X^{™} , Unix^{™} , Linux ^{™} , FreeBSD ^{™} , or the like.

Other implementations of the embodiments of the present disclosure will be apparent to those skilled in the art from consideration of the specification and practice of the invention disclosed herein. The present disclosure is intended to cover any modifications, uses or adaptive changes of the embodiments of the present disclosure, which follow the general principles of the embodiments of the present disclosure and include common knowledge or conventional technical means in the technical field that are not disclosed in the present disclosure. It is intended that the specification and examples be considered as exemplary only, with a true scope and spirit of the disclosed embodiments being indicated by the following claims.

It should be understood that the embodiments of the present disclosure are not limited to the exact structures that have been described above and shown in the drawings, and that various modifications and changes may be made without departing from the scope thereof. The scope of the embodiments of the present disclosure is limited only by the appended claims.

## Claims

1. An information processing method, performed by a user equipment (UE), comprising:
sending indication information to a network device according to whether the UE has an available moving path, wherein the indication information indicates whether the UE has the available moving path.

2. The method according to claim 1, wherein the indication information comprises an indication of availability or an indication of unavailability,
the indication of availability indicates that the UE has the available moving path, and
the indication of unavailability indicates that the UE does not have the available moving path.

3. The method according to claim 2, wherein sending the indication information to the network device according to whether the UE has the available moving path comprises at least one of:
in response to the UE having the available moving path and the UE having not sent path-related information, sending the indication of availability to the network device; or
in response to the available moving path of the UE being updated, sending the indication of availability to the network device.

4. The method according to claim 3, wherein the UE having not sent the path-related information comprises at least one of:
the UE having not sent the path-related information to the network device since entering a connected state;
the UE having not sent the path-related information to the network device since entering a current serving cell;
the UE having not sent the path-related information to the network device since being configured to send the indication information;
the UE having not sent the path-related information to the network device through specific information since being configured to send the indication information; or
the UE having not sent the path-related information to the network device since receiving configuration information for the indication information.

5. The method according to claim 3, wherein the available moving path of the UE being updated comprises at least one of:
a current available moving path not containing at least one path point of a historical available moving path; or
a position deviation and/or a time deviation between the current available moving path and the historical available moving path reaching a threshold value.

6. The method according to claim 2, wherein sending the indication information to the network device according to whether the UE has the available moving path comprises:
in response to the UE not having the available moving path and the UE having sent path-related information, sending the indication of unavailability to the network device.

7. The method according to claim 6, wherein the UE having sent the path-related information comprises at least one of:
the UE having sent the path-related information to the network device since entering a connected state;
the UE having sent the path-related information to the network device since entering a current serving cell;
the UE having sent the path-related information to the network device since being configured to send the indication information;
the UE having sent the path-related information to the network device through specific information since being configured to send the indication information; or
the UE having sent the path-related information to the network device since receiving configuration information for the indication information.

8. The method according to any one of claims 1 to 7, further comprising:
receiving the configuration information sent by the network device, wherein the configuration information is used by the UE to send the path-related information, wherein the path-related information comprises the indication information and/or path information of a moving path.

9. The method according to any one of claims 1 to 8, wherein sending the indication information to the network device according to whether the UE has the available moving path comprises:
sending UE assistance information (UAI) comprising the indication information according to whether the UE has the available moving path.

10. An information processing method, performed by a network device, comprising:
receiving indication information sent by a user equipment (UE), wherein the indication information indicates whether the UE has an available moving path.

11. The method according to claim 10, wherein the indication information comprises an indication of availability or an indication of unavailability,
the indication of availability indicates that the UE has the available moving path, and
the indication of unavailability indicates that the UE does not have the available moving path.

12. The method according to claim 11, further comprising at least one of:
in response to the network device receiving the indication of availability and having not received path-related information, determining that the UE has the available moving path; or
in response to the network device receiving the indication of availability and having received the path-related information, determining that the available moving path of the UE is updated.

13. The method according to claim 12, wherein the network device having not received the path-related information comprises at least one of:
the network device having not received the path-related information since the UE entered a connected state;
the network device having not received the path-related information since the UE entered a current serving cell;
the network device having not received the path-related information since the UE was configured to send the indication information;
the network device having not received the path-related information through specific information since the UE was configured to send the indication information; or
the network device having not received the path-related information since the UE received configuration information for the indication information.

14. The method according to any one of claims 10 to 13, further comprising:
sending the configuration information to the UE, wherein the configuration information is used by the UE to send the path-related information, wherein the path-related information comprises the indication information and/or path information of a moving path.

15. The method according to any one of claims 10 to 14, wherein receiving the indication information sent by the UE comprises:
receiving UE assistance information (UAI) comprising the indication information.

16. An information processing apparatus, applied to a user equipment (UE), comprising:
an indication information sending module, configured to send indication information to a network device according to whether the UE has an available moving path, wherein the indication information indicates whether the UE has the available moving path.

17. An information processing apparatus, applied to a network device, comprising:
an indication information receiving module, configured to receive indication information sent by a user equipment (UE), wherein the indication information indicates whether the UE has an available moving path.

18. A communication device, comprising a processor, a transceiver, a memory, and an executable program stored in the memory and capable of being run by the processor, wherein the processor, when running the executable program, performs the information processing method according to any one of claims 1 to 9 or any one of claims 10 to 15.

19. A computer storage medium storing an executable program, wherein after the executable program is executed by a processor, the information processing method according to any one of claims 1 to 9 or any one of claims 10 to 15 is implemented.
